(19) Europäisches Patentamt
European Patent Office
Office européen des brevets

(11) **EP 3 317 693 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(21) Anmeldenummer: **16753572.3**

(22) Anmeldetag: **13.06.2016**

(51) Int Cl.:
*G01S 13/58* (2006.01)    *G01S 13/93* (2020.01)
*B60W 30/08* (2012.01)    *B60W 30/095* (2012.01)
*G01S 17/93* (2020.01)

(86) Internationale Anmeldenummer:
**PCT/DE2016/200272**

(87) Internationale Veröffentlichungsnummer:
**WO 2017/000942 (05.01.2017 Gazette 2017/01)**

(54) **VERBESSERTE BERECHNUNG DER ZEIT BIS ZUR KOLLISION FÜR EIN FAHRZEUG**

IMPROVED CALCULATION OF THE TIME TO COLLISION FOR A VEHICLE

CALCUL AMÉLIORÉ DU TEMPS AVANT UNE COLLISION IMMINENTE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2015 DE 102015212250**

(43) Veröffentlichungstag der Anmeldung:
**09.05.2018 Patentblatt 2018/19**

(73) Patentinhaber: **Conti Temic microelectronic GmbH**
**90411 Nürnberg (DE)**

(72) Erfinder:
• **GUTMANN, Christian**
**60389 Frankfurt (DE)**
• **DIEPOLDER, Thomas**
**87439 Kempten (DE)**
• **SCHNURR, Clemens**
**88142 Wasserburg (DE)**

(74) Vertreter: **Continental Corporation**
**c/o Conti Temic microelectronic GmbH**
**Intellectual Property**
**Sieboldstraße 19**
**90411 Nürnberg (DE)**

(56) Entgegenhaltungen:
**EP-A2- 1 475 764**    **DE-A1-102013 212 473**
**US-A1- 2005 131 590**    **US-A1- 2006 145 463**
**US-A1- 2014 032 094**

**Beschreibung**

Die Erfindung betrifft eine Vorrichtung und ein Verfahren zur Berechnung eines Kollisionszeitpunkts mit einem vorausfahrenden Fahrzeug nach den Ansprüchen 1.9.

Stand der Technik

Verschiedene Fahrerassistenzsysteme wie zum Beispiel der Notbremsassistenz oder die adaptive Geschwindigkeitsregelung (ACC) benutzen zum Steuern von einzelnen Funktionen die Zeitspanne bis zur Kollision (TTC, time to collison) mit einem Hindernis.

Die Ermittlung der für die Berechnung der TTC notwendigen Größen erfolgt beispielsweise mittels Umfelderfassungssensoren wie Radar- oder Lidar- oder Kamera-Sensoreinheiten und/ oder funkbasierten C2X-Sensoren, die Informationen über eine Fahrzeugumgebung zur Verfügung stellen. Diese Informationen werden beispielsweise von anderen Fahrzeugen oder einer externen Infrastruktur (Verkehrszeichen, Baken, Server ertc.) gesendet.

Aus der US 8,527,172 B2 ist beispielsweise ein Kollisionsverhinderungs- und Warnsystem bekannt, dass eine TTC mit einem Zielfahrzeug aus den Geschwindigkeiten, den Beschleunigungen und dem Abstand von zwei Fahrzeugen bestimmt.

Die DE 10 2013 212 473 A1 beschreibt ein Verfahren für die selbstständige Aktivierung eines Systems zur Unterstützung eines Fahrers eines Fahrzeugs bei einer drohenden Kollision. Eine Aktivierung des zumindest einen Systems erfolgt, wenn ein erstes Kritikalitätsmaß K1, das aus dem Abstand zum Kollisionsobjekt und von zumindest einer der beiden Größen Relativgeschwindigkeit und Relativbeschleunigung zum Kollisionsobjekt bestimmt wird, einen vorgebbaren Schwellwert S_krit überschreitet und zudem ein zweites Kritikalitätsmaß K2 vorgesehen ist, das in Abhängigkeit von dem Abstand zwischen Fahrzeug und Kollisionsobjekt und der Fahrzeuggeschwindigkeit und nicht in Abhängigkeit von zumindest einer der beiden Größen Relativgeschwindigkeit und Relativbeschleunigung zum Kollisionsobjekt bestimmt wird, und ein erster Schwellwert S1_K2 vorgesehen ist und bei einem Wert des zweiten Kritikalitätsmaßes K2 oberhalb des ersten Schwellwerts S1_K2 eine Aktivierung des Systems unterbleibt.

Die US2014/032094A1 beschreibt ein Verfahren zur Erkennung von kritischen Fahrsituationen von Kraftwagen, insbesondere zur Vermeidung von Kollisionen mit einem vor einem eigenen Fahrzeug befindlichen Objekt, mit folgenden Schritten: Erfassen einer aktuellen Fahrzeugbeschleunigung und einer aktuellen Fahrzeuggeschwindigkeit eines eigenen Fahrzeuges; Vorgeben eines von Fahrgrößen des eigenen Fahrzeuges abhängigen Beschleunigungsprofils; Annehmen eines zeitlichen Verlaufs einer vorherzusehenden Beschleunigung des eigenen Fahrzeuges basierend auf dessen aktueller Beschleunigung; Bestimmen eines Wegprofils des eigenen Fahrzeuges aus dem zeitlichen Verlaufs der vorherzusehenden Beschleunigung; Erfassen eines aktuellen Abstandes und einer aktuellen relativen Geschwindigkeit eines vor dem eigenen Fahrzeug befindlichen Objektes; Berechnen der aktuellen absoluten Geschwindigkeit des Objektes sowie der absoluten aktuellen Beschleunigung des Objektes; Annehmen eines zeitlichen Verlaufs einer vorherzusehenden Beschleunigung des Objekts basierend auf dessen aktueller Beschleunigung; Bestimmen eines Wegprofils des Objektes aus dem zeitlichen Verlaufs der vorherzusehenden Beschleunigung; Vergleichen des Wegprofils des eigenen Fahrzeugs mit dem Wegprofil des Objektes; und falls sich die beiden Wegprofile schneiden, Bestimmen eines voraussichtlichen Kollisionszeitpunkts des eigenen Fahrzeuges mit dem Objekt; Festlegen eines Zeitpunkts vor dem voraussichtlichen Kollisionszeitpunkt Vergleichen dieses Zeitpunkts mit dem bestimmten voraussichtlichen Kollisionszeitpunkt; und falls der voraussichtliche Kollisionszeitpunkt vor dem festgelegten Zeitpunkt liegt, Ausgeben einer Warnung an den Fahrer des eigenen Fahrzeuges.

Aufgabe der vorliegenden Erfindung ist es, die Berechnung der eingangs erwähnten TTC zu verbessern. Gelöst wird diese Aufgabe durch ein Verfahren und eine Vorrichtung gemäß den unabhängigen Ansprüchen. Weitere vorteilhafte Ausgestaltungen sind Gegenstand der abhängigen Ansprüche.

Erfindungsgemäß wird ein erster Kollisionszeitpunkt mit einem vorausfahrenden Fahrzeug durch die in Anspruch 1 definierten Schritte bestimmt.

In vorteilhafter Weise wird dabei die Annahme getroffen, das eine Verzögerung nicht bis zum Stillstand des vorausfahrenden Fahrzeugs beibehalten wird. Das

vorausfahrende Fahrzeug verzögert beispielsweise bei einem Abbiegevorgang nur für eine gewisse Zeitdauer und verlässt danach die Fahrspur des Fahrzeugs. Ähnlich verhält sich das vorausfahrende Fahrzeug bei einer Geschwindigkeitsbegrenzung, da dort lediglich die Geschwindigkeit bis auf die geforderte Höhe reduziert wird.

Im Bremszeitpunk des vorausfahrenden Fahrzeugs ist das Abbiegen oder das Reduzieren der Geschwindigkeit jeweils ein angenommenes, hypothetisches Verhalten des vorausfahrenden Fahrzeugs. Jedes hypothetische Verhalten wird mit einer Eintrittswahrscheinlichkeit bewertet, um eine Auswahl zu treffen, ob das vorausfahrende Fahrzeug nun abbiegen oder lediglich die Geschwindigkeit reduzieren will. Nachdem diese Auswahl getroffen wurde, erfolgt eine Reaktion des Egofahrzeugs auf das wahrscheinliche, hypothetische Verhalten des vorausfahrenden Fahrzeugs.

In einer weiteren Ausgestaltung der Erfindung kann während dem Ablauf der angenommen Dauer der Verzögerung erneut der Abstand zum vorausfahrenden Fahrzeug, die Relativgeschwindigkeit des vorausfahrenden Fahrzeugs zum Egofahrzeug und die Verzögerung des vorausfahrenden Fahrzeugs ermittelt werden, eine weitere Dauer der Verzögerung des vorausfahrenden Fahrzeugs angenommen werden, und aus der Relativgeschwindigkeit, dem Abstand, der Verzögerung und der weiteren Dauer der Verzögerung ein aktueller Kollisionszeitpunkt mit dem vorrausfahrenden Fahrzeug bestimmt werden.

In vorteilhafter Weise wird dadurch der Kollisionszeitpunkt erneut mit den aktuellen Werten für Abstand, Relativgeschwindigkeit und Verzögerung, sowie einer weiteren angenommenen Zeitdauer bestimmt. In vorteilhafter Weise ist dadurch eine fortdauernde Berechnung des Kollisionszeitpunkts möglich.

Bevorzugt kann eine Eintrittswahrscheinlichkeit für ein hypothetisches Verhalten des vorausfahrenden Fahrzeugs angenommen werden.

In einer vorteilhaften Ausgestaltung der Erfindung kann aus dem Abstand und der Relativgeschwindigkeit des vorausfahrenden Fahrzeugs zum Egofahrzeug ein zusätzlicher Kollisionszeitpunkt bestimmt, und aus dem zusätzlichen Kollisionszeitpunkt und dem ersten oder dem aktuellen Kollisionszeitpunkt ein Korrekturwert berechnet werden, der die Eintrittswahrscheinlichkeit für das hypothetische Verhalten des vorausfahrenden Fahrzeugs korrigiert. In der Regel wird die Eintrittswahrscheinlichkeit reduziert.

In vorteilhafter Weise wird die Eintrittswahrscheinlichkeit für das hypothetische Verhalten des vorausfahrenden Fahrzeugs mittels des Korrekturwerts variierbar. Der Korrekturwert ermöglicht eine situationsabhängige Feinjustierung der Reaktion auf das hypothetische Verhalten des vorausfahrenden Fahrzeugs.

In besonders vorteilhafter Weise können die Reaktion auf ein angenommenes hypothetisches Verhalten des vorausfahrenden Fahrzeugs mittels des Korrekturwerts bis zu einer gewissen Schwelle verzögert werden.

Insbesondere ist der Korrekturwert für kleine Unterschiede zwischen der bekannten und der verbesserten TTC nahe 1, d.h. die Eintrittswahrscheinlichkeit wird nur wenig reduziert. Bei größeren Unterschieden hingegen, ist der Korrekturfaktor nahe 0, sodass die Eintrittswahrscheinlichkeit für das hypothetische Verhalten durch den sehr kleinen Korrekturfaktor reduziert wird und dieses hypothetische Verhalten wenig Berücksichtigung findet. Somit können die Reaktionen auf das jeweilige hypothetische Verhalten eingeschränkt bzw. verhindert werden.

In einer weiteren bevorzugten Ausgestaltung der Erfindung kann die angenommene Dauer der Verzögerung von einem angenommenen Geschwindigkeitsabbau des vorausfahrenden Fahrzeugs abhängen. In vorteilhafter Weise berechnet sich die angenommene Dauer der Verzögerung aus dem Quotienten von angenommener abgebauter Geschwindigkeit und ermittelter Höhe der Verzögerung des vorausfahrenden Fahrzeugs. Der angenommene Geschwindigkeitsabbau beschreibt die Geschwindigkeitsdifferenz des vorausfahrenden Fahrzeugs vor und nach der Bremsung. Insbesondere wird eine gleichmäßige, konstante Bremsung angenommen, sodass sich die Geschwindigkeitsdifferenz aus der Dauer der Bremsung bei konstanter Verzögerung ergibt.

Gemäß der Erfindung nach Anspruch 1 hängt die angenommene Dauer der Verzögerung von einer Höhe der Verzögerung und dem Abstand des vorausfahrenden Fahrzeugs ab. Es kann bei einer hohen Verzögerung von einer kurzen Dauer der Verzögerung ausgegangen werden und bei einer niedrigen Verzögerung von einer langen Dauer der Verzögerung. Da der Abstand ebenfalls berücksichtigt wird, wird damit die angenommene Dauer der Verzögerung ausreichend lang und hinreichend kurz gewählt.

In einer weiteren bevorzugten Ausgestaltung der Erfindung kann die Verzögerung kleiner als 10 $m/s^2$ oder größer als 3 $m/s^2$ angenommen werden. In vorteilhafter Weise kann bis zu dieser Maximalverzögerung davon ausgegangen werden, dass die Bremsung des vorausfahrenden Fahrzeugs noch vor dem Stillstand aufhört. Des Weiteren ermöglicht die Mindestverzögerung von 3 $m/s^2$ eine Toleranz gegenüber Messungenauigkeiten.

Bevorzugt kann die angenommene Dauer der Verzögerung des vorausfahrenden Fahrzeugs mindestens 1 Sekunde betragen. In vorteilhafter Weise kann während dieser Zeitspanne der Kollisionszeitpunkt erneut mit den aktuellen Werten berechnet werden.

In einer weiteren bevorzugten Ausgestaltung der Erfindung kann der Kollisionszeitpunkt oder der Korrekturwert für die Reaktion, insbesondere eine Warnmeldung an einen Fahrer, des Egofahrzeugs benutzt werden. In vorteilhafter Weise reagiert das Egofahrzeug somit nicht auf das angenommene hypothetische Verhalten des vorausfahrenden Fahrzeugs. Beispielsweise unterbleibt damit eine Warnmeldung an den Fahrer, da diese sich mit hoher Wahrscheinlichkeit als Fehlwarnung herausstellen würde.

Bevorzugt kann die Reaktion, insbesondere eine Warnmeldung an einen Fahrer, des Egofahrzeugs in Abhängigkeit von dem ersten oder aktuellen Kollisionszeitpunkt oder dem Korrekturwert verzögert werden. In vorteilhafter Weise wird die Eintrittswahrscheinlichkeit durch die fortdauernde Bestimmung der verbesserten TTC aktualisiert und die Warnmeldung solange verzögert, bis die Eintrittswahrscheinlichkeit für das angenommene hypothetische Verhalten des vorausfahrenden Fahrzeugs ausreichend groß ist. In weiter vorteilhafter Weise kann auch eine Bremsung des Egofahrzeugs als eine Reaktion durchgeführt werden, insbesondere ist dadurch eine komfortable Bremsung möglich.

Erfindungsgemäß umfasst eine Vorrichtung eine Erfassungseinheit zum Erfassen des Abstands und der Relativgeschwindigkeit eines vorausfahrenden Fahrzeugs, eine Bestimmungseinheit zum Bestimmen der Verzögerung des vorausfahrenden Fahrzeugs und eine Berechnungseinheit zur Berechnung der verbesserten TTC nach Anspruch 9.

Bevorzugt kann die Erfassungseinheit als eine Radar- oder Kameraeinrichtung ausgebildet sein.

Figurenbeschreibung und Ausführungsbeispiele
Fig. 1 zeigt beispielhaft den Verlauf zweier TTC bei verschiedenen Abständen zu einem vorausfahrenden Fahrzeug.
Fig. 2 zeigt den Verlauf einer verbesserter TTC bei einem geringen Abstand zum vorausfahrenden Fahrzeug.
Fig. 3 zeigt den Verlauf einer verbesserter bei einem großen Abstand zum vorausfahrenden Fahrzeug.
Fig. 4 zeigt eine Kurvenschar für die angenommene Dauer der Bremsung in Abhängigkeit von der Höhe der Verzögerung des vorausfahrenden Fahrzeugs und des Abstands.
Fig. 5 zeigt den beispielhaften Verlauf eines Korrekturfaktors zum Anpassen der Wahrscheinlichkeit des Eintritts einer angenommenen Hypothese über das zukünftige Verhalten des vorausfahrenden Fahrzeugs.

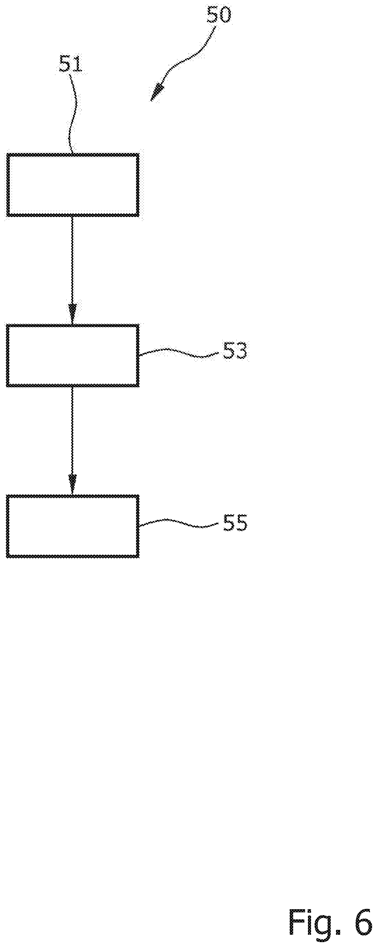

Fig. 6 zeigt eine Vorrichtung zur Berechnung der verbesserten TCC.

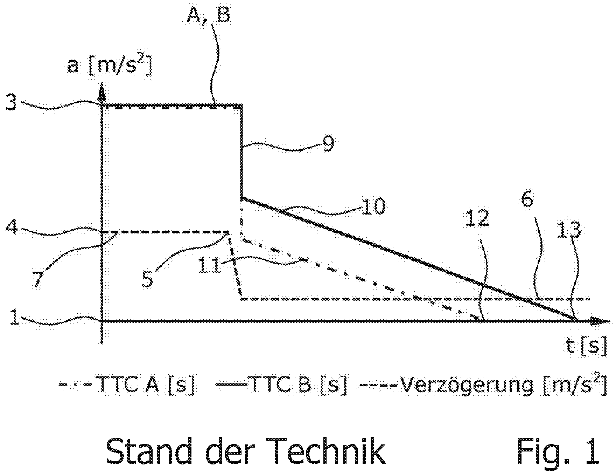

Ein beispielhafter Verlauf zweier TTCs (time to collison) bis zur Kollision mit einem vorausfahrenden Fahrzeug als Hindernis ist in Figur 1 gezeigt. Auf der Ordinate ist die Verzögerung des vorausfahrenden Fahrzeugs aufgetragen, die Abszisse stellt die Zeitachse dar. Im Ursprung 1 des Koordinatensystems wird das vorausfahrende Fahrzeug erkannt. Beispielhaft ist der Verlauf zweier TTCs A, B über die Zeit dargestellt. Die durchgezogene Linie B und die Strichpunktlinie A zeigen jeweils eine TTC, wobei im Detektionszeitpunkt 3 der Abstand zum vorausfahrenden Fahrzeug bei der TTC B größer als bei der TTC A ist. Die gestrichelte Linie 7 zeigt die Verzögerung des vorausfahrenden Fahrzeugs an, die im Detektionszeitpunkt 4 null ist. Im Zeitpunkt 5 verzögert das vorausfahrende Fahrzeug plötzlich stark und behält diese Verzögerung 6 bei. Die Relativgeschwindigkeit zum vorausfahrenden Fahrzeug verringert sich, sodass die Werte für die TTC A, B abfallen 9. Da das vorausfahrende Fahrzeug die Verzögerung beibehält, nimmt die TTC A, B im weiteren Verlauf linear 10, 11 bis zu einer möglichen Kollision oder Stillstand 12, 13 ab. Beide TTCs verlaufen parallel, wobei die Kollision bei der TTC A aufgrund des geringeren Abstands eher eintritt als bei der TTC B.

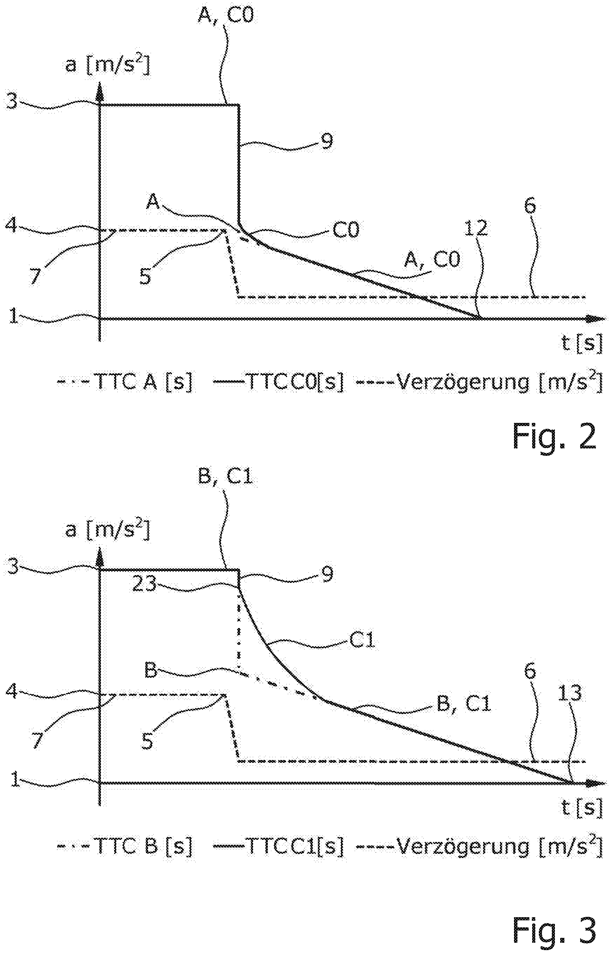

Figur 2 zeigt den verbesserten Verlauf der TTC C0 im Vergleich zum bekannten Verlauf der TTC A bei einem geringen Abstand zum vorausfahrenden Fahrzeug im Detektionszeitpunkt 3 bis zur Kollision 12. Auf der Ordinate ist die Verzögerung des vorausfahrenden Fahrzeugs aufgetragen, die Abszisse stellt die Zeitachse dar. Im Ursprung 1 des Koordinatensystems wird das vorausfahrende Fahrzeug erkannt. Wie in Figur 1 zeigt die gestrichelte Linie 7 die Verzögerung des vorausfahrenden Fahrzeugs an, die im Detektionszeitpunkt 4 null ist. Im Zeitpunkt 5 verzögert das vorausfahrende Fahrzeug plötzlich stark und behält diese Verzögerung 6 bei. Zum Vergleich mit dem Stand der Technik ist ebenfalls der Verlauf der TTC A (als Strichpunktlinie) aus Figur 1 dargestellt. Unmittelbar nach dem Bremsen 5 des vorausfahrenden Fahrzeugs verringert sich die Relativgeschwindigkeit, sodass die Werte für die TTC A und TTC C0 abfallen 9.

Die verbesserte Berechnung der TTC C0 unterscheidet sich bei geringen Abständen zum vorausfahrenden Fahrzeug nur minimal von der bekannten TTC A. Daher sind die beiden Verläufe der TTCs bis auf dem Zeitpunkt kurz nach der Bremsung 5 identisch.

Figur 3 zeigt den verbesserten Verlauf der TTC C1 im Vergleich zum bekannten Verlauf der TTC B bei einem großen Abstand zum vorausfahrenden Fahrzeug im Detektionszeitpunkt 3 bis zur Kollision 13. Auf der Ordinate ist die Verzögerung des vorausfahrenden Fahrzeugs aufgetragen, die Abszisse stellt die Zeitachse dar. Im Ursprung 1 des Koordinatensystems wird das vorausfahrende Fahrzeug erkannt. Wie in Figur 1 und 2 zeigt die gestrichelte Linie 7 die Verzögerung des vorausfahrenden Fahrzeugs, die im Detektionszeitpunkt 4 null ist. Im Zeitpunkt 5 verzögert das vorausfahrende Fahrzeug und behält diese Verzögerung 6 bei. Zum Vergleich mit dem Stand der Technik ist ebenfalls der Verlauf der TTC B (als Strichpunktlinie) aus Figur 1 dargestellt. Unmittelbar nach dem Bremsen 5 des vorausfahrenden Fahrzeugs verringert sich die Relativgeschwindigkeit, sodass die Werte für die TTC B und TTC C1 abfallen 9.

Die verbesserte Berechnung der TTC C1 unterscheidet sich bei großen Abständen zum vorausfahrenden Fahrzeug unmittelbar 23 nach dem Bremsen 9 des vorausfahrenden Fahrzeugs. Die verbesserte TCC C1 fällt im Vergleich zur TTC B langersamer ab. Dem verminderten Fallen der TTC C1 liegt die Annahme zugrunde, dass das vorausfahrende Fahrzeug zwar verzögert, diese Verzögerung jedoch nur kurzfristig ist und nicht bis zum Stillstand durchgehalten wird.

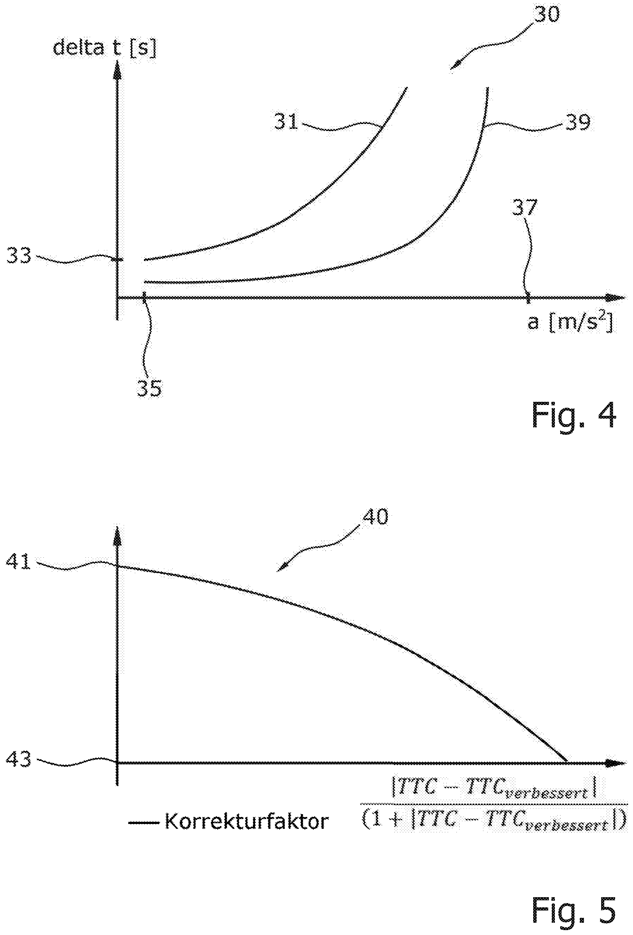

Figur 4 sind exemplarisch zwei Kurven einer Kurvenschar 30 dargestellt, mittels derer eine verbesserte TCC gemäß der Erfindung nach Anspruch 1 berechnet wird. Aus der Änderung der Geschwindigkeit des vorausfahrenden Fahrzeugs, die sich aus der Relativgeschwindigkeit berechnet, wird eine aktuelle Verzögerung des vorausfahrenden Fahrzeugs ermittelt und ein Geschwindigkeitsabbau des vorausfahrenden Fahrzeugs angenommen. Die Annahme über die Höhe des Geschwindigkeitsabbaus basiert auf der ermittelten Höhe der Verzögerung und des Abstandes des vorausfahrenden Fahrzeugs. Aus dem angenommenen Geschwindigkeitsabbau und der ermittelten Verzögerung lässt sich die Zeitdauer errechnen, die das vorausfahrende Fahrzeug benötigt, um den angenommenen Geschwindigkeitsabbau zu erreichen. Weil die errechnete Zeitdauer für die Verzögerungen auf einem angenommenen Geschwindigkeitsabbau beruht, handelt es sich bei der Zeitdauer ebenfalls nur um einen Annahme. Der Punkt 37 in Figur 4 stellt den Nullpunkt dar, bei dem keine Verzögerung erfolgt.

Die Kurve 31 zeigt die angenommene Dauer der Verzögerung bei einem Abstand von 25 m. Beispielsweise wird angenommen, dass das vorausfahrende Fahrzeug bei einem Abstand von 25 m seine Geschwindigkeit um 10 m/s verringert. Abhängig von der ermittelten Verzögerung des vorausfahrenden Fahrzeugs ergibt sich die angenommene Dauer der Verzögerung aus Figur 4. Bei einer Verzögerung von 10 m/s² 35 benötigt das vorausfahrende Fahrzeug 1s 33, um seine Geschwindigkeit um den angenommen Wert zu verringern. Nach Ablauf dieser angenommenen Dauer der Verzögerung werden ein weiteres Mal die aktuellen Werte (Verzögerung, Abstand) bestimmt und eine neue Annahme über die Dauer der Verzögerung, bzw. die Höhe des Geschwindigkeitsabbaus gemäß der Kurvenschar 30 getroffen.

Eine weitere Kurve 39 zeigt die angenommene Dauer der Verzögerung des vorausfahrenden Fahrzeugs bei einem Abstand von 100m in Abhängigkeit der ermittelten Verzögerung.

Bei kleinen Abständen (beispielsweise 25m bei Kurve 31) wird ein hoher Geschwindigkeitsabbau angenommen, was bei geringer Verzögerung zu einer längeren angenommene Dauer der Verzögerung führt. Bedingt durch den kurzen Abstand führt die lang angenommene Dauer der Verzögerung zu einer TTC-Berechnung, als wenn die Bremsung bis zum Stillstand aufrecht gehalten wird. Die verbesserte Berechnung der TTC nährt sich daher bei geringen Abständen der bekannten TTC Berechnung, die von einer Verzögerung bis zum Stillstand ausgeht, an.

Hingegen wird bei großen Abständen 39 ein geringer Geschwindigkeitsabbau angenommen, der zu einer kurzen angenommenen Dauer der Verzögerung führt. Der große Abstand zum vorausfahrenden Fahrzeug ermöglicht also eine erneute Berechnung der TTC nach dem Verstreichen der angenommenen Dauer der Verzögerung. Da angenommen wird, das die Verzögerung nur kurz dauert und danach keinen Verzögerung erfolgt, führt dies zu einer Erhöhung der TTC und einem verzögerten Auslösen von Reaktionen auf die ansonsten niedrigere TTC. Die niedrigere TTC würde entstehen, wenn eine Verzögerung bis zum Stillstand des vorausfahrenden Fahrzeugs erfolgte, also von einer sehr langen Dauer der Verzögerung ausgegangen würde.

Nach Ablauf der angenommenen Dauer der Verzögerung erfolgt eine erneute Berechnung der TTC mit den dann neu ermittelten Werten. Dies führt dazu, dass bei einer Verzögerung bis zum Stillstand die verbesserte TTC sich der bekannten TTC annähert. Mit anderen Worten ausgedrückt, je länger die Verzögerung anhält, desto mehr nähert sich die verbesserte Berechnung der bekannten Berechnung an.

Figur 5 zeigt die Kennlinie 40 eines Korrekturfaktors, der aus der bekannten TTC und der verbesserten TTC beispielsweise durch folgende Gleichung berechnet wird.

$$\frac{|TTC - TTC_{verbessert}|}{(1 + |TTC - TTC_{verbessert}|)}$$

Der Korrekturfaktor wird dann zum Reduzieren der Wahrscheinlichkeit der Hypothese über das weitere Verhalten des vorausfahrenden Fahrzeugs verwendet. Für kleine Differenzen zwischen der bekannten TTC und der verbesserten TCC ist der Korrekturfaktor 41 nahe 1, d.h. die Wahrscheinlichkeit wird nur gering reduziert. Bei größeren Differenzen wird die Wahrscheinlichkeit hingegen durch den kleinen Wert 43 unterdrückt und somit die Reaktionen auf die Hypothese eingeschränkt bzw. verhindert.

Die Vorrichtung 50 in Figur 5 umfasst einen Radarsensor 51, der einen Abstand und eine Relativgeschwindigkeit eines vorausfahrenden Fahrzeugs misst. Der Radarsensor 51 nutzt dabei den Dopplereffekt aus. Eine Bestimmungseinheit 53 bestimmt aus der Relativgeschwindigkeit und deren Abweichung über die Zeit die Verzögerung des vorausfahrenden Fahrzeugs. Eine Berechnungseinheit 55 berechnet aufgrund der gemessenen und bestimmten Informationen eine verbesserte TTC.

**Patentansprüche**

1. Verfahren für ein Egofahrzeug zur Bestimmung eines ersten Kollisionszeitpunkts mit einem vorausfahrenden Fahrzeug mit den Schritten:

   ein Ermitteln eines Abstands zum vorausfahrenden Fahrzeug;
   ein Ermitteln einer Relativgeschwindigkeit des vorausfahrenden Fahrzeugs zum Egofahrzeug;
   ein Ermitteln einer aktuellen Verzögerung des vorausfahrenden Fahrzeugs;
   ein Annehmen einer Dauer der Verzögerung des vorausfahrenden Fahrzeugs; und
   ein Bestimmen des ersten Kollisionszeitpunkts mit dem vorrausfahrenden Fahrzeug aus der Relativgeschwindigkeit, dem Abstand, der aktuellen Verzögerung und der angenommenen Dauer der Verzögerung, wobei
   aus der Relativgeschwindigkeit eine Änderung der Geschwindigkeit des vorausfahrenden Fahrzeugs berechnet wird, und
   aus der Änderung der Geschwindigkeit des vorausfahrenden Fahrzeugs die aktuelle Verzögerung des vorausfahrenden Fahrzeugs ermittelt wird, **dadurch gekennzeichnet, dass**
   ein Geschwindigkeitsabbau des vorausfahrenden Fahrzeugs basierend auf der ermittelten aktuellen Verzögerung und des Abstandes des vorausfahrenden Fahrzeugs angenommen wird, und
   die angenommene Dauer der Verzögerung des vorausfahrenden Fahrzeugs anhand einer Kurvenschar (30) ermittelt wird, die mehrere Kurven (31, 39) aufweist, wobei eine jeweilige Kurve (31, 39) die angenommene Dauer der Verzögerung des vorausfahrenden Fahrzeugs bei einem jeweiligen, für die jeweilige Kurve vorgegebenen Abstand zum vorausfahrenden Fahrzeug in Abhängigkeit von der ermittelten aktuellen Verzögerung des vorausfahrenden Fahrzeugs zeigt.

2. Verfahren gemäß Anspruch 1, wobei
während der angenommenen Dauer der Verzögerung erneut der Abstand zum vorausfahrenden Fahrzeug, die Relativgeschwindigkeit des vorausfahrenden Fahrzeugs zum Egofahrzeug und die aktuelle Verzögerung des vorausfahrenden Fahrzeugs ermittelt werden; eine weitere Dauer der Verzögerung des vorausfahrenden Fahrzeugs angenommen wird; und
aus der Relativgeschwindigkeit, dem Abstand, der Verzögerung und der weiteren Dauer der Verzögerung ein aktueller Kollisionszeitpunkt mit dem vorausfahrenden Fahrzeug bestimmt wird.

3. Verfahren gemäß einem der vorherigen Ansprüche, wobei
eine Eintrittswahrscheinlichkeit für ein hypothetisches Verhalten des vorausfahrenden Fahrzeugs angenommen wird;
insbesondere wird zudem
aus dem Abstand und der Relativgeschwindigkeit des vorausfahrenden Fahrzeugs zum Egofahrzeug ein zusätzlicher Kollisionszeitpunkt bestimmt wird und aus dem zusätzlichen Kollisionszeitpunkt und dem ersten oder dem aktuellen Kollisionszeitpunkts ein Korrekturwert berechnet wird, der die Wahrscheinlichkeit für das hypothetische Verhalten des vorausfahrenden Fahrzeugs korrigiert.

4. Verfahren gemäß einem der vorherigen Ansprüche, wobei die angenommene Dauer der Verzögerung von dem angenommenen Geschwindigkeitsabbau des vorausfahrenden Fahrzeugs abhängt.

5. Verfahren gemäß Anspruch 4, wobei
die Höhe des angenommenen Geschwindigkeitsabbaus kleiner als 10 m/s oder größer als 3 m/s ist.

6. Verfahren gemäß einem der vorherigen Ansprüche, wobei die angenommene Dauer der Verzögerung des vorausfahrenden Fahrzeugs mindestens 1 Sekunde beträgt.

7. Verfahren gemäß einem der vorherigen Ansprüche, wobei der Kollisionszeitpunkt oder der Korrekturwert für die Reaktion, insbesondere eine Warnmeldung an einen Fahrer, des Egofahrzeugs benutzt wird.

8. Verfahren gemäß Anspruch 7, wobei die Reaktion, insbesondere eine Warnmeldung an einen Fahrer, des Egofahrzeugs in Abhängigkeit von dem ersten oder aktuellen Kollisionszeitpunkt oder dem Korrekturwert verzögert wird.

9. Vorrichtung umfassend,

   - eine Erfassungseinheit (51), insbesondere eine Radar- oder Kameraeinrichtung, die konfiguriert ist zum Erfassen des Abstands und der Relativgeschwindigkeit eines vorausfahrenden Fahrzeugs;
   - eine Bestimmungseinheit (53), die konfiguriert ist zum Bestimmen der Verzögerung des vorausfahrenden Fahrzeugs; und
   - eine Berechnungseinheit (55), die konfiguriert ist zum Durchführen des Verfahrens gemäß einem der vorherigen Ansprüche.

**Claims**

1. Method for an ego vehicle for determining a first collision time with a vehicle travelling ahead, having the steps of:

   determining a distance from the vehicle travelling ahead;
   determining a relative speed of the vehicle travelling ahead with respect to the ego vehicle;
   determining a current deceleration of the vehicle travelling ahead;
   assuming a duration of the deceleration of the vehicle travelling ahead; and
   determining the first collision time with the vehicle travelling ahead from the relative speed, the distance, the current deceleration and the assumed duration of the deceleration, wherein
   a change in the speed of the vehicle travelling ahead is calculated from the relative speed, and the current deceleration of the vehicle travelling ahead is determined from the change in the speed of the vehicle travelling ahead, **characterized in that**
   a reduction in speed of the vehicle travelling ahead is assumed on the basis of the determined current deceleration and the distance from the vehicle travelling ahead, and
   the assumed duration of the deceleration of the vehicle travelling ahead is determined on the basis of a family of curves (30) which has a plurality of curves (31, 39), wherein a respective curve (31, 39) shows the assumed duration of the deceleration of the vehicle travelling ahead at a respective distance, predefined for the respective curve, from the vehicle travelling ahead as a function of the determined current deceleration of the vehicle travelling ahead.

2. Method according to Claim 1, wherein,
during the assumed duration of the deceleration, the distance from the vehicle travelling ahead, the relative speed of the vehicle travelling ahead with respect to the ego vehicle and the current deceleration of the vehicle travelling ahead are determined again; a further duration of the deceleration of the vehicle travelling ahead is assumed; and a current collision time with the vehicle travelling ahead is determined from the relative speed, the distance, the deceleration and the further duration of the deceleration.

3. Method according to one of the preceding claims, wherein
a probability of occurrence of a hypothetical behaviour of the vehicle travelling ahead is assumed; in particular, in addition, an additional collision time is determined from the distance and the relative speed of the vehicle travelling ahead with respect to the ego vehicle, and a correction value, which corrects the probability of the hypothetical behaviour of the vehicle travelling ahead, is determined from the additional collision time and the first or the current collision time.

4. Method according to one of the preceding claims, wherein
the assumed duration of the deceleration depends on the assumed reduction in speed of the vehicle travelling ahead.

5. Method according to Claim 4, wherein
the value of the assumed reduction in speed is less than 10 m/s or higher than 3 m/s.

6. Method according to one of the preceding claims, wherein
the assumed duration of the deceleration of the vehicle travelling ahead is at least 1 second.

7. Method according to one of the preceding claims, wherein
the collision time or the correction value is used for the reaction, in particular a warning message to a driver, of the ego vehicle.

8. Method according to Claim 7, wherein
the reaction, in particular a warning message to a driver, of the ego vehicle is delayed as a function of the first or current collision time or the correction value.

9. Device comprising:

   - a detection unit (51), in particular a radar device or camera device, which is configured to detect the distance and the relative speed of a vehicle travelling ahead;
- a determining unit (53) which is configured to determine the deceleration of the vehicle travelling ahead; and
- a calculation unit (55) which is configured to carry out the method according to one of the preceding claims.

**Revendications**

1. Procédé destiné à un véhicule hôte pour déterminer un premier instant de collision avec un véhicule précédent, le procédé comprenant les étapes suivantes :

   déterminer une distance par rapport au véhicule précédent ;
   déterminer une vitesse relative du véhicule précédent par rapport au véhicule hôte ;
   déterminer une décélération actuelle du véhicule précédent ;
   supposer une durée de décélération du véhicule précédent ; et
   déterminer le premier instant de collision avec le véhicule précédent à partir de la vitesse relative, de la distance, de la décélération actuelle et de la durée supposée de la décélération, une variation de vitesse du véhicule précédent étant calculée à partir de la vitesse relative, et la décélération actuelle du véhicule précédent étant déterminée à partir de la variation de vitesse du véhicule précédent, **caractérisé en ce que**
   une réduction de vitesse du véhicule précédent est supposée sur la base de la décélération actuelle déterminée et de la distance par rapport au véhicule précédent, et
   la durée supposée de la décélération du véhicule précédent est déterminée sur la base d'une famille de courbes (30) qui comporte plusieurs courbes (31, 39), une courbe respective (31, 39) indiquant la durée supposée de la décélération du véhicule précédent pour une distance respective, spécifiée pour la courbe respective, par rapport au véhicule précédent en fonction de la décélération actuelle déterminée du véhicule précédent.

2. Procédé selon la revendication 1,
la distance au véhicule précédent, la vitesse relative du véhicule précédent par rapport au véhicule hôte et la décélération actuelle du véhicule précédent étant à nouveau déterminées pendant la durée supposée de la décélération ; une autre durée de décélération du véhicule précédent étant supposée ; et

un instant actuel de la collision avec le véhicule précédent étant déterminé à partir de la vitesse relative, de la distance, de la décélération et de l'autre durée de la décélération.

3. Procédé selon l'une des revendications précédentes, une probabilité d'occurrence d'un comportement hypothétique du véhicule précédent étant supposée ;

en particulier, un instant de collision supplémentaire étant déterminé à partir de la distance et de la vitesse relative du véhicule précédent par rapport au véhicule hôte et

une valeur de correction étant calculée à partir de l'instant de collision supplémentaire et du premier instant de collision ou de l'instant de collision actuel, laquelle valeur corrige la probabilité du comportement hypothétique du véhicule précédent.

4. Procédé selon l'une des revendications précédentes, la durée supposée de la décélération dépendant de la réduction de vitesse supposée du véhicule précédent.

5. Procédé selon la revendication 4,
le niveau de réduction de vitesse supposée étant inférieur à 10 m/s ou supérieur à 3 m/s.

6. Procédé selon l'une des revendications précédentes, la durée supposée de la décélération du véhicule précédent étant d'au moins 1 seconde.

7. Procédé selon l'une des revendications précédentes, l'instant de collision ou la valeur de correction étant utilisé(e) pour la réaction, notamment un message d'avertissement d'un conducteur, du véhicule hôte.

8. Procédé selon la revendication 7,
la réaction, notamment un message d'avertissement d'un conducteur, du véhicule hôte étant retardée en fonction du premier instant de collision ou de l'instant de collision actuel ou de la valeur de correction.

9. Dispositif comprenant

    - une unité de détection (51), en particulier un moyen formant radar ou caméra, qui est conçue pour détecter la distance et la vitesse relative d'un véhicule précédent ;
    - une unité de détermination (53) conçue pour déterminer la décélération du véhicule précédent ; et
    - une unité de calcul (55) qui est conçue pour mettre en œuvre le procédé selon l'une des revendications précédentes.

Stand der Technik                    Fig. 1

Fig. 2

Fig. 3

Fig. 4

Fig. 5

50

51

53

55

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8527172 B2
- DE 102013212473 A1
- US 2014032094 A1